(19) Europäisches Patentamt
European Patent Office
Office européen des brevets

(11) **EP 1 243 085 B1**

(12) **EUROPÄISCHE PATENTSCHRIFT**

(45) Veröffentlichungstag und Bekanntmachung des Hinweises auf die Patenterteilung:
**10.03.2004 Patentblatt 2004/11**

(21) Anmeldenummer: **00991533.1**

(22) Anmeldetag: **19.12.2000**

(51) Int Cl.⁷: **H04B 3/54**, H04Q 11/04

(86) Internationale Anmeldenummer:
**PCT/DE2000/004547**

(87) Internationale Veröffentlichungsnummer:
**WO 2001/050629 (12.07.2001 Gazette 2001/28)**

(54) **UMSETZUNG EINES BIDIREKTIONALEN S2M-DATENSTROMS FÜR EINE ÜBERMITTLUNG ÜBER EIN NIEDERSPANNUNGSSTROMNETZ**

TRANSPOSING A BI-DIRECTIONAL S 2m? DATA STREAM FOR TRANSMISSION VIA A LOW-VOLTAGE NETWORK

CONVERSION D'UN FLUX DE DONNEES S 2m? BIDIRECTIONNEL POUR SA TRANSMISSION PAR L'INTERMEDIAIRE D'UN RESEAU BASSE TENSION

(84) Benannte Vertragsstaaten:
**AT BE CH CY DE DK ES FI FR GB GR IE IT LI LU MC NL PT SE TR**

(30) Priorität: **30.12.1999 DE 19963817**

(43) Veröffentlichungstag der Anmeldung:
**25.09.2002 Patentblatt 2002/39**

(73) Patentinhaber: **SIEMENS AKTIENGESELLSCHAFT**
**80333 München (DE)**

(72) Erfinder:
• **STOLLE, Jörg**
  **45478 Mülheim (DE)**
• **IDE, Hans-Dieter**
  **44287 Dortmund (DE)**
• **NEUHAUS, Ralf**
  **44534 Lünen (DE)**

(56) Entgegenhaltungen:
• **HENSEN C ET AL: "ISDN-So-Bus Extension by Power-Line Using CDMA Technique" PROCEEDINGS OF THE 3RD INTERNATIONAL SYMPOSIUM ON POWER-LINE COMMUNICATIONS AND ITS APPLICATIONS (ISPLC'99), LANCASTER, UK, 30. März 1999 (1999-03-30) - 1. April 1999 (1999-04-01), XP001009460**
• **FÖHST C ET AL: "Unter Strom -Die Power-Line-Technologie vor dem kommerziellen Einsatz" NET - ZEITSCHRIFT FÜR KOMMUNIKATIONSMANAGEMENT, Bd. 52, Nr. 7, 1998, Seiten 48-49, XP000777785 ISSN: 0947-4765**
• **ETS 300 011-1 INTEGRATED SERVICES DIGITAL NETWORK (ISDN); PRIMARY RATE USER-NETWORK INTERFACE (UNI); PART 1: LAYER 1 SPECIFICATION, März 1998 (1998-03), XP002169490**

**Beschreibung**

Die starke Entwicklung des Telekommunikationsmarktes in den letzten Jahren hat zur Folge, daß der Suche nach bisher ungenutzten Übertragungskapazitäten mehr Bedeutung beigemessen wird, bzw. daß versucht wird vorhandene Übertragungskapazitäten effizienter zu nutzen. Ein bekanntes Datenübertragungsverfahren ist die Übermittlung von Daten über das Stromversorgungsnetz, in der Literatur häufig als 'Powerline Communication' kurz mit 'PLC' bezeichnet. Ein Vorteil der Nutzung des Stromversorgungsnetzes als Medium zur Datenübertragung liegt in der bereits bestehenden Netzinfrastruktur. So verfügt fast jeder Haushalt sowohl über einen Zugang zum Stromversorgungsnetz als auch über ein bestehendes, weit verzweigtes Inhausstromnetz.

Das Stromversorgungsnetz gliedert sind in Europa je nach Art der Energieübertragung in verschiedene Netzstrukturen bzw. Übertragungsebenen. Die Hochspannungsebene mit einem Spannungsbereich von 110 kV bis 380 KVB dient einer Energieübertragung über weite Entfernungen. Die Mittelspannungsebene mit einem Spannungsbereich von 10 kV bis 38 kV dient dazu, die elektrische Energie vom Hochspannungsnetz in Verbrauchernähe zu führen und wird für den Verbraucher durch geeignete Netztransformatoren auf eine Niederspannungsebene mit einem Spannungsbereich bis 0,4 kV abgesenkt. Die Niederspannungsebene untergliedert sich wiederum in einen sogenannten Außerhausbereich - auch als 'Last Mile' oder 'Access Bereich' bezeichnet - und in einen sogenannten Inhausbereich - auch als 'Last Meter' bezeichnet. Der Außerhausbereich der Niederspannungsebene definiert den Bereich des Stromversorgungsnetzes zwischen Netztransformator und einer jeweils einem Verbraucher zugeordneten Zählereinheit. Der Inhausbereich der Niederspannungsebene definiert den Bereich von der Zählereinheit bis zu den Anschlußeinheiten für den Verbraucher.

Für eine Datenübertragung über das Stromversorgungsnetz sind in Europa durch die Norm EN 50065 vier unterschiedliche Frequenzbereiche - in der Literatur häufig als CENELEC-Bänder A bis D bezeichnet - mit einem zugelassenen Frequenzbereich von 9 kHz bis 148,5 kHz und jeweils einer maximal zulässigen Sendeleistung festgelegt, die allein für eine Datenübermittlung auf Basis der 'Powerline Communication' reserviert sind. Durch die in diesem Frequenzbereich zur Verfügung stehende geringe Bandbreite und die eingeschränkte Sendeleistung sind hierbei jedoch nur Datenübertragungsraten von einigen 10 kBit/s realisierbar.

Für Telekommunikationsanwendungen, wie z. B. einer Übermittlung von Sprachdaten, werden in der Regel jedoch Datenübertragungsraten im Bereich von einigen MBit/s benötigt. Für die Realisierung einer solchen Datenübertragungsrate ist vor allem eine genügend große Übertragungsbandbreite erforderlich, die ein Frequenzspektrum bis 20 MHz mit geeignetem Übertragungsverhalten bedingt. Eine Datenübertragung im Frequenzbereich bis 20 MHz mit einem geeigneten Übertragungsverhalten ist heute ausschließlich in der Niederspannungsebene des Stromversorgungsnetzes realisierbar.

In der Druckschrift Hensen, C. : ISDN-SO-Bus Extension by Power-Line CDMA Technique, in: Proceedings of the 3rd International Symposium on Power-Line Communications and its Applications wird eine Übertragung eines $S_0$-Busses in einem Inhaus-Niederspannungsnetz offenbart. Dabei wird eine Mehrbenutzerumgebung mit Hilfe eines CDMA-Zugangsverfahrens (Code Division Multiple Access) realisiert. CDMA ist ein Zugangsverfahren, das mehreren Kommunikationsendeinrichtungen oder Datenstationen einen Zugriff auf einen gemeinsamen Übertragungskanal ermöglicht. In diesem Verfahren belegen mehrere einen gemeinsamen Übertragungskanal teilende Kommunikationsndeinrichtungen einen identischen Frequenzbereich, wobei das Nutzsignal für jede Kommunikationsendeinrichtung individuell kodiert wird. Die Kodierung basiert auf einer Spreizung eines Nutzinformationen zugeordneten Übertragungskanals ("Nutzkanal"). Im beschriebenen Verfahren erfolgt diese Kodierung durch jeweilige Multiplikation des Nutzsignals mit einem Pseudo-Rausch-Signalkode.

Eine Übermittlung von digitalen Sprachdaten stellt zusätzlich zur Bandbreite hohe Anforderungen in Bezug auf die Echtzeitfähigkeit und die zulässige maximale Bitfehlerrate - kurz BER - des Datenübertragungssystems. Zusätzlich bedingt eine Übermittlung von digitalen Sprachdaten eine kollisionsfreie Punkt-zu-Multipunkt-Datenübertragung im Vollduplexbetrieb, d.h. eine fehlerfreie, gleichzeitige Datenübertragung in beiden Übertragungsrichtungen zwischen mehreren Teilnehmern. Ein bekanntes Datenübertragungsverfahren zur Übertragung von digitalen Sprachdaten ist das ISDN-Übertragungsverfahren (Integrated Services Digital Network). Eine Datenübertragung gemäß dem ISDN-Übertragungsverfahren welches die obengenannten Bedingungen erfüllt kann beispielsweise auf Basis der bekannten $S_{2m}$-Schnittstelle - in der Literatur häufig auch als Primärmultiplexanschluß oder 'PCM-Highway' (Puls Code Modulation) bezeichnet - erfolgen.

Der vorliegenden Erfindung liegt die Aufgabe zugrunde, Maßnahmen vorzusehen, durch welche eine Umsetzung einer $S_{2m}$-Schnittstelle für eine Datenübermittlung auf Basis einer 'Powerline Communication' erfolgen kann.

Die Lösung dieser Aufgabe erfolgt erfindungsgemäß mit den Merkmalen des Patentanspruchs 1 bzw. 14.

Ein wesentlicher Vorteil des erfindungsgemäßen Verfahrens bzw. der erfindungsgemäßen Vorrichtung besteht darin, daß durch eine Umsetzung der bekannten $S_{2m}$-Schnittstelle für eine Datenübermittlung auf Basis der 'Powerline Communication' - insbesondere über den Außerhausbereich des Niederspannungsstromnetzes - bei einem an das Stromversorgungsnetz angeschlossenen Verbraucher eine Übermittlung von digitalen Sprachdaten mittels herkömmlicher ISDN-Kommunikationseinrichtungen ohne einen separaten, aufwendigen Anschluß an ein digitales Kommunikationsnetz ermöglicht wird.

Vorteilhafte Weiterbildungen der Erfindung sind in den Unteransprüchen angegeben.

Ein Vorteil von in den Unteransprüchen definierten Ausgestaltungen der Erfindung besteht unter anderem darin, daß durch eine Nutzung von bekannten, z.B. auf Basis des von der ITU-T standardisierten Sprachkodieralgorithmus G.729 basierenden, Komprimierungsverfahren bzw. Komprimierungseinrichtungen auf einfache Weise die für eine Übermittlung eines $S_{2m}$-Datenstroms über das Niederspannungsstromnetz benötigte Bandbreite .reduziert werden kann.

Ein Ausführungsbeispiel der Erfindung wird im folgenden anhand der Zeichnung näher erläutert.

Dabei zeigen:

Fig. 1: ein Strukturbild zur schematischen Darstellung eines Stromversorgungsnetzes;

Fig. 2a: ein Strukturbild zur schematischen Darstellung einer Rahmenstruktur eines $S_{2m}$-Datenstroms:

Fig. 2b: ein Strukturbild zur schematischen Darstellung einer Umwandlung eines in einem HDB3-Kanalkode kodierten $S_{2m}$-Datenstroms in einen binär kodierten $S_{2m}$-Datenstrom;

Fig. 3: ein Strukturbild zur schematischen Darstellung einer durch eine Komprimierunseinheit ausgeführten Komprimierung des binär kodierten $S_{2m}$-Datenstroms;

Fig. 4: ein Strukturbild zur schematischen Darstellung einer Linearisierung des binär kodierten $S_{2m}$-Datenstroms;

Fig. 5: ein Strukturbild zur schematischen Darstellung einer Umsetzung des $S_{2m}$-Datenstroms für eine Übermittlung über ein Niederspannungsnetz gemäß einer ersten Ausführungsform;

Fig. 6: ein Strukturbild zur schematischen Darstellung einer Umsetzung des $S_{2m}$-Datenstroms für eine Übermittlung über das Niederspannungsnetz gemäß einer zweiten Ausführungsform.

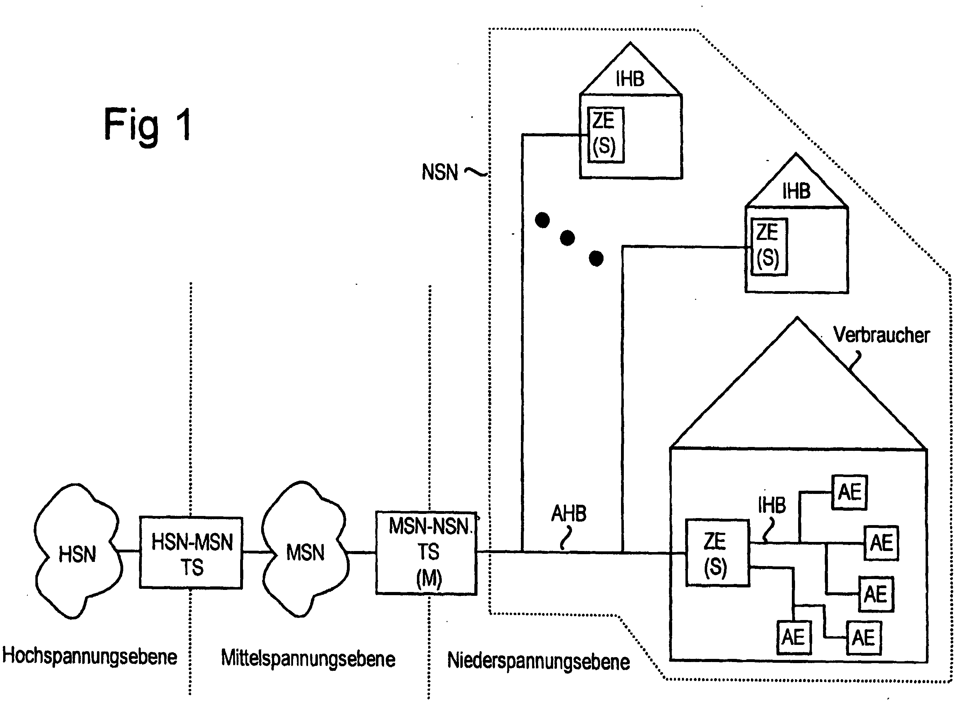

Fig. 1 zeigt ein Strukturbild mit einer schematischen Darstellung eines Stromversorgungsnetzes. Das Stromversorgungsnetz gliedert sind in Abhängigkeit der Energieübertragungart in verschiedene Netzstrukturen bzw. Übertragungsebenen. Die Hochspannungsebene bzw. das Hochspannungsnetz HSN mit einem Spannungsbereich von 110 kV bis 380 kV dient einer Energieübertragung über weite Entfernungen. Die Mittelspannungsebene bzw. das Mittelspannungsnetz MSN mit einem Spannungsbereich von 10 kV bis 38 kV dient dazu, die elektrische Energie vom Hochspannungsnetz in Verbrauchernähe zu führen. Das Mittelspannungsnetz MSN ist dabei über eine die jeweiligen Spannungen umsetzende Transformatorstation HSN-MSN TS mit dem Hochspannungsnetz HSN verbunden. Das Mittelspannungsnetz MSN ist zusätzlich über eine weitere Transformatorstation MSN-NSN TS mit dem Niederspannungsnetz NSN verbunden.

Die Niederspannungsebene bzw. das Niederspannungsnetz mit einem Spannungsbereich bis 0,4 kV gliedert sich in einen sogenannten Außerhausbereich AHB und in einen sogenannten Inhausbereich IHB. Der Außerhausbereich AHB definiert den Bereich des Niederspannungsnetzes NSN zwischen der weiteren Transformatorstation MSN-NSN TS und einer einem jeweiligen Verbraucher zugeordneten Zählereinheit ZE. Durch den Außerhausbereich AHB sind mehrere Inhausbereiche IHB mit der die Umsetzung auf das Mittelspannungsnetz MSN realisierenden weiteren Transformatorstation MSN-NSN TS verbunden. Der Inhausbereich IHB definiert den Bereich von der Zählereinheit ZE bis zu im Inhausbereich IHB angeordneten Anschlußeinheiten AE. Eine Anschlußeinheit AE ist beispielsweise eine an das Niederspannungsnetz NSN angeschlossene Steckdose. Das Niederspannungsnetz NSN im Inhausbereich IHB ist dabei in der Regel als Baumnetzstruktur ausgelegt, wobei die Zählereinheit ZE die Wurzel der Baumnetzstruktur bildet.

Für eine Übermittlung von digitalen Sprachdaten - insbesondere auf Basis der $S_{2m}$-Schnittstelle - über das Stromversorgungsnetz ist eine Übertragungsbandbreite von einigen MBit/s mit einem geeigneten Übertragungsverhalten notwendig, welche zur Zeit nur im Niederspannungsnetz NSN realisierbar ist. Die $S_{2m}$-Schnittstelle verwendet als Leitungskode standardmäßig einen sogenannten 'HDB-3-Kanalkode' (High Density Bipolar), welcher zur Umsetzung der $S_{2m}$-Schnittstelle für eine Datenübermittlung über das Niederspannungsnetz NSN in einen binären Kode umgewandelt wird.

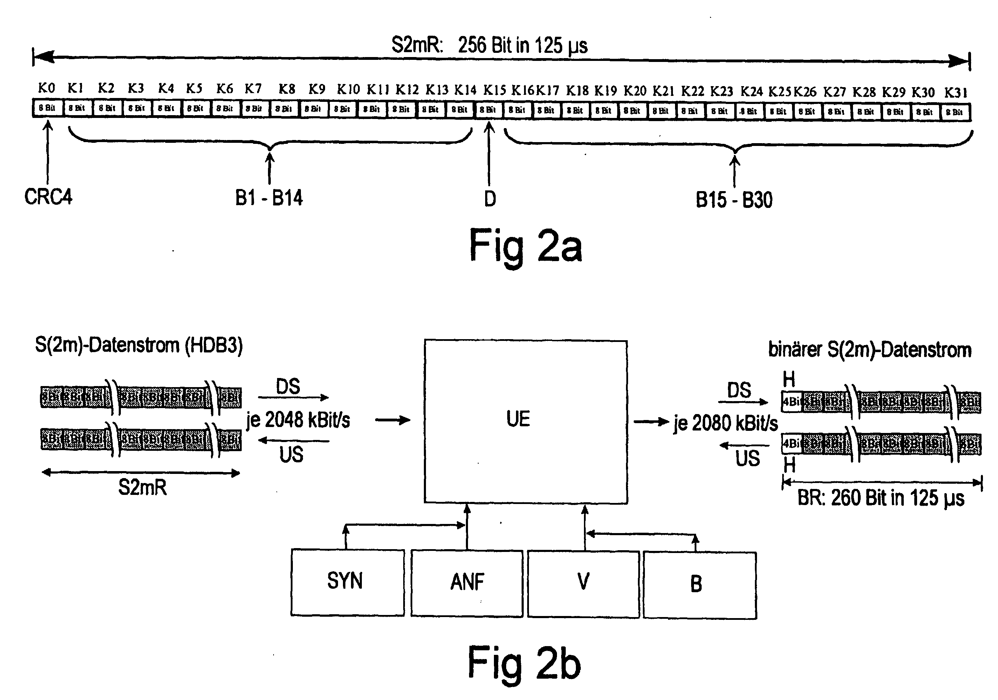

Fig. 2a zeigt ein Strukturbild zur schematischen Darstellung einer Rahmenstruktur des $S_{2m}$-Datenstroms. Ein $S_{2m}$-Datenstrom besteht für beide Übertragungsrichtungen jeweils aus einer Folge von nacheinander zu übertragenden, sogenannten $S_{2m}$-Rahmen S2mR. Ein $S_{2m}$-Rahmen S2mR ist in 32 Kanäle K0,..., K31 gegliedert, die jeweils eine Länge von 8 Bit aufweisen. Ein $S_{2m}$-Rahmen S2mR umfaßt dabei im wesentlichen 30 Nutzdatenkanäle B1,....B30, welche jeweils als ISDN-orientierte B-Kanäle mit einer Übertragungsbitrate von jeweils 64 kBit/s ausgestaltet sind und einen Signalisierungskanal D, welcher als ISDN-orientierter D-Kanal mit einer Übertragungsbitrate von 64 kBit/s ausgestaltet ist. Über den ersten Kanal K0 wird eine Rahmensteuerungsinformation gemäß der CRC4-Prozedur (Cyclic Redundancy Checksum) übermittelt. Über die Kanäle K1,...,K14 wird die den Nutzdatenkanälen B1 bis B14 zugeordnete Nutzdateninformation, über den Kanal K15 die dem Signalisierungskanal D zugeordnete Signalisierungsinformation und über die Kanäle K16,..., K31 die den Nutzdatenkanälen B15 bis B30 zugeordnete Nutzdateninformation übermittelt. Die Rahmendauer für einen $S_{2m}$-Rahmen S2mR beträgt 125 µs, so daß sich pro $S_{2m}$-Rahmen S2mR eine Übertragungsbitrate von

$$(32 \times 8 \text{ Bit}) / 125 \ \mu\text{s} = 2048 \text{ kBit/s}$$

ergibt.

Fig. 2b zeigt ein Strukturbild zur schematischen Darstellung der Umwandlung eines im HDB-3-Kanalkode kodierten $S_{2m}$-Datenstroms in einen binär kodierten $S_{2m}$-Datenstrom. Beim HDB-3-Kanalkode handelt es sich um einen pseudoternären Leitungskode, bei dem die beiden binären Zustände "0" und "1" durch die drei Signalpotentiale '0', '1' und '-1' repräsentiert werden. Hierbei wird der binäre Zustand "1" durch das Signalpotential '0' repräsentiert. Dem binären Zustand "0" wird entweder ein positives oder ein negatives Signalpotential '1' oder '-1' zugeordnet. Um die Übertragung langer Nullfolgen zu vermeiden wird beim HDB-Kanalkode bei der Übertragung von mehr als n aufeinanderfolgenden Nullen eine charakteristische Bitfolge eingefügt. So wird beim HDB-3-Kanalkode (n = 3) nach 3 Nullen eine charakteristische '1/-1'-Kombination hinzugefügt.

Für eine bidirektionale Datenübermittlung über die $S_{2m}$-Schnittstelle ist in der Regel eine 4-Draht-Übertragung vorgesehen, wobei die beiden Übertragungsrichtungen - im folgenden als Downstream-Richtung DS und Upstream-Richtung US bezeichnet - über getrennte Leitungen geführt werden. Die Downstream-Richtung DS definiert dabei die Datenübertragung über eine Übertragungsstrecke von einer zentralen, die Übertragung steuernden Einrichtung - im folgenden als 'Master' M bezeichnet - zu weiteren an der Übertragungsstrecke angeschlossenen Einrichtungen - im folgenden als 'Slaves' S bezeichnet. Die Upstream-Richtung US definiert die Datenübertragung von den jeweiligen Slaves S zum Master M. Beim vorliegenden Ausführungsbeispiel werden die, die Spannungspegel-Umsetzung zwischen dem Mittelspannungsnetz MSN und dem Niederspannungsnetz NSN realisierende weitere Transformatorstation MSN-NSN TS als Master M - durch das in Fig. 1 in Klammern gesetzte M angedeutet - und die einem jeweiligen Inhausbereich IHB zugeordneten Zählereinheiten ZE als Slaves S - durch das in Fig. 1 in Klammern gesetzte S angedeutet - konfiguriert.

In der Figur ist für einen im HDB-3-Kanalkode kodierten, pseudoternären $S_{2m}$-Datenstrom jeweils ein $S_{2m}$-Rahmen S2mR in Downstream-Richtung DS und in Upstream-Richtung US dargestellt. Ein $S_{2m}$-Rahmen S2mR weist eine Rahmendauer von 125 µs auf und umfaßt insgesamt 256 Bit. Die Bedingungen für eine Datenübermittlung über die $S_{2m}$-Schnittstelle sind in der ITU-T (International Telecommunication Union) Spezifikation I.431 "ISDN User-Network Interfaces - Primary Rate User Network Interface - Layer 1" standardisiert.

Der im HDB-3-Kanalkode kodierte, pseudoternäre $S_{2m}$-Datenstrom wird durch eine Umwandlungseinheit UE in einen binären $S_{2m}$-Datenstrom umgewandelt. Hierbei wird sowohl für den Downstream-Datenstrom DS als auch für den Upstream-Datenstrom US die im HDB-3-Kanalkode kodierte 256 Bit umfassende Information des $S_{2m}$-Rahmens S2mR in eine 256 Bit umfassende, binär kodierte Information umgewandelt und durch einen 4-Bit langen Header H zu einem 260 Bit langen Binärrahmen BR zusammengefaßt. Der Header H umfaßt dabei ein Synchronisations-Bit SYN, ein Anfangszustands-Bit ANF, ein V-Bit V und ein B-Bit B. Das Anfangszustands-Bit ANF beinhaltet eine Information über das dem ersten "0"-Zustand zugeordnete Signalpotential im HDB3-Kanalkode. Da das Signalpotential für den "0" Zustand das Potential 1 oder -1 besitzen kann, ist diese Information für eine Wiederherstellbarkeit des ursprünglichen HDB3-Kanalkodes auf der Empfängerseite notwendig. Das Synchronisations-Bit SYN dient einer Synchronisation der auf Empfängerseite aus den Binärrahmen BR wiederhergestellten, einander zugeordneten $S_{2m}$-Rahmen S2mR für den Downstream-Datenstrom DS und den Upstream-Datenstrom US. Das V-Bit V und das B-Bit B sind HDB-Kanalkodespezifische Informationen zur Fehlererkennung, durch welche die Ubertragungssicherheit erhöht wird.

Somit ergibt sich für den binären $S_{2m}$-Datenstrom sowohl für den Downstream-Datenstrom DS als auch für den Upstream-Datenstrom US jeweils eine erhöhte Übertragungsbitrate von

$$(256 + 4) \text{ Bit} / 125 \mu\text{s} = 2080 \text{ kBit/s}.$$

Um die für eine Datenübermittlung über das Niederspannungsnetz NSN benötigte Bandbreite zu reduzieren wird die im Rahmen eines Binärrahmens BR übermittelte Information komprimiert. Hierbei wird nur die im Rahmen der Nutzdatenkanäle B1,...,B30 übermittelte Nutzdateninformation komprimiert. Die im Rahmen des Signalisierungskanals D übermittelte Signalisierungsinformation und die zusätzliche Steuerinformation CRC4 werden transparent, d.h. ohne Komprimierung übermittelt.

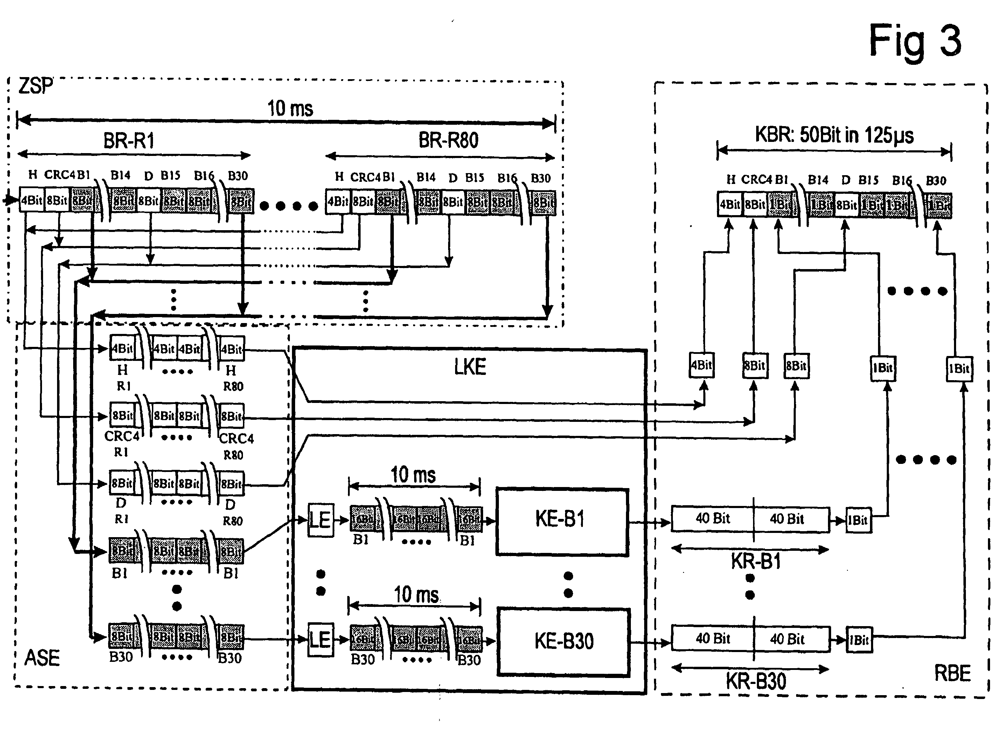

Fig. 3 zeigt in einer schematischen Darstellung ein Verfahren zur Komprimierung des binär kodierten, aus einer Folge von Binärrahmen BR bestehenden $S_{2m}$-Datenstroms. Für die Komprimierung werden jeweils achtzig einer Übertragungsrichtung DS, US zugeordnete Binärrahmen BR-R1,...,BR-R80 in einer Speichereinrichtung ZSP einer Komprimierungseinheit zwischengespeichert. Bei einer jeweiligen Dauer der Binärrahmen BR von 125 µs entspricht dies einer Gesamtdauer von 10 ms. Nachfolgend werden die zwischen gespeicherten Binärrahmen BR-R1,...,BR-R80 in einer Separierungseinheit ASE jeweils in logische Einheiten untergliedert und voneinander separiert. Logische Einheiten bilden der Header H, die Steuerinformation CRC4, der Signalisierungskanal D und jeweils die Nutzdatenkanäle B1,...,B30. Die logischen Einheiten der Binärrahmen BR-R1, ...,BR-R80 werden anschließend - wie in der Figur veranschaulicht - zu jeweils einem Verarbeitungsrahmen zusammengefaßt und an eine Linearisierungs- und Komprimierungseinheit LKE weitergeleitet. Die aus dem Header H, der Steuerinformation CRC4 und dem Signalisierungskanal D gebildeten Verarbeitungsrahmen werden dabei transparent, d.h. ohne Komprimierung durch die Linearisierungs- und Komprimierungseinheit LKE geführt.

Die den Nutzdatenkanälen B1,...,B30 zugeordneten Verarbeitungsrahmen werden dagegen jeweils einer Linearisierunseinheit LE der Linearisierungs- und Komprimierungseinheit LKE zugeführt. Der einem Nutzdatenkanal B1,...,B30 zugeordnete Verarbeitungsrahmen umfaßt insgesamt achtzig einem jeweiligen Nutzdatenkanal B1,...,B30 zugeordnete Nutzdaten-Bytes, wobei jedem Binärrahmen BR-R1,..., BR-R80 jeweils 1 Nutzdaten-Byte durch die Position im Verarbeitungsrahmen zugeordnet ist. Die im Rahmen der Nutzdatenkanäle B1,...,B30 übertragene Nutzdateninformation ist standardmäßig gemäß einer nichtlinearen, sogenannten A-Kennlinie mit einer 8-Bit Auflösung kodiert. Um bekannte Komprimierungsverfahren nutzen zu können, ist eine der Komprimierung vorgeschaltete Linearisierung der Nutzdateninformation notwendig. Gleichzeitig mit der Linearisierung erfolgt eine Umsetzung der 8-Bit Auflösung auf eine 16-Bit Auflösung. Somit ergibt sich für die Nutzdatenkanäle B1,..., B30 jeweils ein Verarbeitungsrahmen mit einer Länge von 80 x 16 = 1280 Bit und einer Dauer von 10 ms.

Die Verarbeitungsrahmen mit der linear kodierten Nutzdateninformation werden anschließend jeweils einer kanalspezifischen Komprimierungseinheit KE-B1,...,KE-B30 zugeführt. Durch die kanalspezifischen Komprimierungseinheiten KE-B1,...,KE-B30 erfolgt eine Komprimierung der in den Verarbeitungsrahmen übermittelten Nutzdateninformation gemäß dem von der ITU-T standardisierten Komprimierungsverfahren G.729. Dieser Sprachkodieralgorithmus wandelt die linear kodierten 16-Bit-Abtastwerte mit einer Abtastfrequenz von 8 kHz in einen 8kBit/s-Datenstrom um. Hierzu ist ein Sprachsegment mit einer Dauer von 10 ms - dies entspricht im vorliegenden Ausführungsbeispiel einer Länge von 1280 Bit Nutzdateninformation - für eine gemäß dem Algorithmus durchzuführende Parameterberechnung notwendig. Am Ausgang der kanalspezifischen Komprimierungseinheiten KE-B1,...,KE-B30 ergeben sich somit für die Nutzdatenkanäle B1,...,B30 jeweils komprimierte Verarbeitungsrahmen KR-B1,..., KR-B30 mit 80 Bit komprimierter Nutzdateninformation und einer Dauer von 10 ms. Alternativ zu dem von der ITU-T standardisierten Komprimierungsverfahren G.

729 können auch andere Komprimierungsverfahren verwendet werden.

Die komprimierten Verarbeitungsrahmen KR-B1, ...,KR-B30 werden nachfolgend einer Rahmenbildungseinheit RBE zugeführt, welche die in den komprimierten Verarbeitungsrahmen KR-B1,...,KR-B30 enthaltene komprimierte Nutzdateninformation gemäß der ursprünglich unkomprimierten Binärrahmen BR-R1,..., BR-R80 separiert und mit den transparent durch die Linearisierungs- und Komprimierungseinheit LKE geführten weiteren Informationen - wie in der Figur dargestellt - zu einem komprimierten Binärrahmen KBR zusammenfügt. Ein komprimierter Binärrahmen KBR weist somit 50 Bit Information - 30 Bit Nutzdateninformation und 20 Bit Zusatzinformation - bei einer Dauer von 125 μs auf. Die für die Übermittlung eines komprimierten Binärrahmens KBR benötigte Übertragungsbandbreite reduziert sich somit im Gegensatz zu einem unkomprimierten Binärrahmen BR von 2080 kBit/s auf 400 kBit/s. Die komprimierten Binärrahmen KBR werden anschließend an eine Übertragungseinheit UEE zur Einspeisung in das Niederspannungsnetz NSN übertragen.

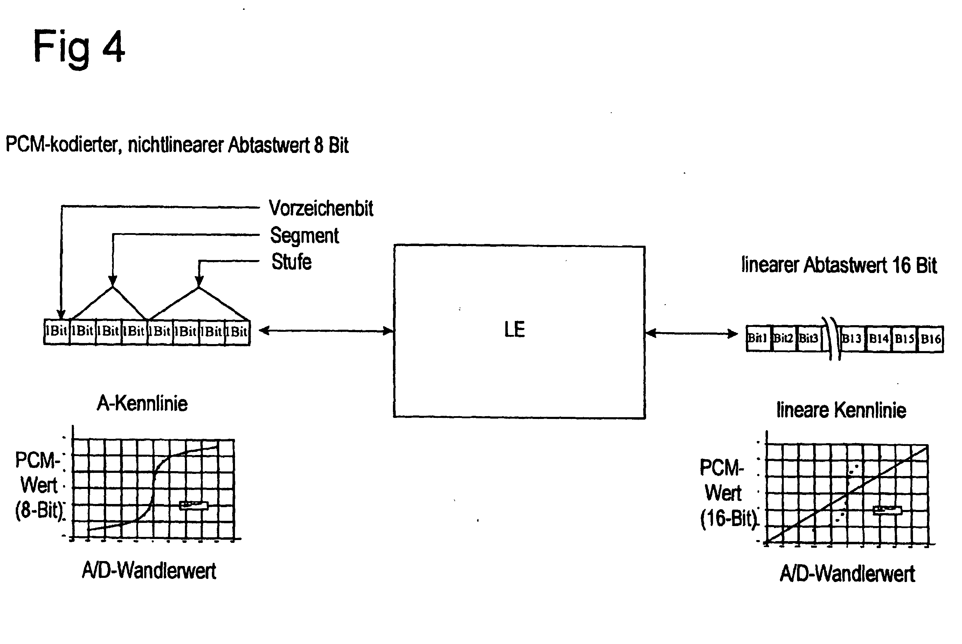

Fig. 4 zeigt nun in einer schematischen Darstellung ein Verfahren zur Linearisierung der in den Verarbeitungsrahmen zusammengefaßten Nutzdateninformation. Die in den Nutzdatenkanälen B1,...,B30 übermittelten Nutzdateninformation ist gemäß der Puls-Code-Modulation kurz PCM kodiert. Die Puls-Code-Modulation verwendet für die Codierung eine nichtlineare, sogenannte "A-Kennlinie".

Die A-Kennlinie setzt sich insgesamt aus 13 Teilstücken - auch als Segmente bezeichnet - zusammen. Nach der Definition der ITU-T wird jeder Amplitudenwert eines abzutastenden Signals durch 8 Bit dargestellt. Der erste Bit gibt das Vorzeichen des abgetasteten Signals an. Die nächsten 3 Bit definieren das relevante Segment der A-Kennlinie und die letzten 4 Bit legen eine Quantisierungsstufe innerhalb eines Segments fest. Insgesamt ergeben sich somit 256 mögliche Quantisierungsstufen.

Durch die Linearisierungseinheit LE wird die gemäß der nichtlinearen A-Kennlinie kodierte Nutzdateninformation in ein, gemäß einer linearen Kennlinie kodiertes Signal umgesetzt. Gleichzeitig erfolgt eine Umsetzung der von der A-Kennlinie verwendeten 8-Bit Auflösung auf eine 16-Bit Auflösung. Durch die Verwendung einer linearen Codierung mit einer 16-Bit Auflösung werden die Voraussetzungen für eine der Linearisierung nachfolgende Verwendung des Komprimierungsverfahrens gemäß dem ITU-T-Standard G.729 geschaffen.

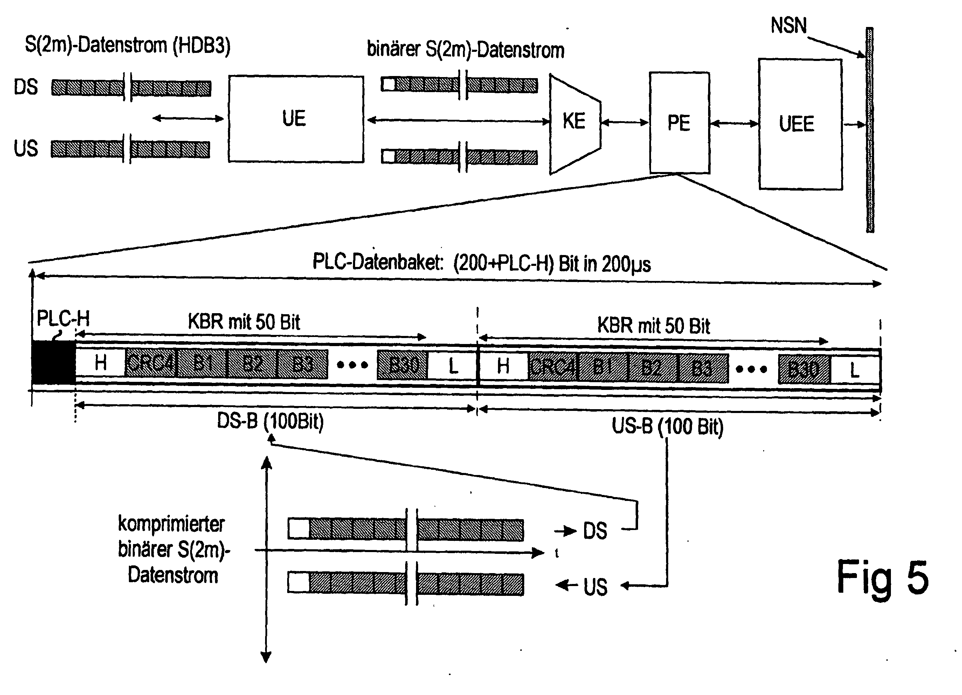

Fig. 5 zeigt ein Strukturbild zur schematischen Darstellung einer Umsetzung des im HDB-3-Kanalkode kodierten, pseudoternären $S_{2m}$-Datenstroms für eine Übermittlung über das Niederspannungsnetz NSN gemäß einer ersten Ausführungsform. In einem ersten Schritt wird der gemäß dem HDB-3-Kanalkode kodierte, pseudoternäre $S_{2m}$-Datenstrom durch die Umwand-

lungseinheit UE - wie unter Bezugnahme auf Fig. 2 beschrieben - in einen binär kodierten $S_{2m}$-Datenstrom umgewandelt. Der binär kodierte, aus einer Folge von Binärrahmen BR bestehende $S_{2m}$-Datenstrom wird anschließend an eine Komprimierungseinheit KE weitergeleitet, durch welche der binär kodierte $S_{2m}$-Datenstrom - wie unter Bezugnahme auf Fig. 3 und Fig. 4 beschrieben - linearisiert und komprimiert wird. In einem nächsten Schritt wird der komprimierte $S_{2m}$-Datenstrom an eine Protokolleinheit PE weitergeleitet, die diesen in ein für eine Datenübermittlung über das Niederspannungsnetz NSN vorgesehenes Datenformat umgewandelt.

Aufgrund der im Außerhausbereich AHB des Niederspannungsnetzes NSN bestehenden Baumstruktur wird für eine Datenübermittlung zwischen den an das Niederspannungsnetz NSN angeschlossenen Verbrauchern und der die Spannungspegel-Umsetzung zwischen dem Mittelspannungsnetz MSN und dem Niederspannungsnetz NSN realisierenden Transformatorstation MSN-NSN TS eine Master-Slave-Kommunikationsbeziehung eingerichtet. Hierbei wird die, die Wurzel der Baumstruktur bildende Transformatorstation MSN-NSN TS als Master M und die einem jeweiligen Verbraucher zugeordneten Zähleinheiten ZE als Slaves S definiert.

Für eine Datenübermittlung über das Niederspannungsnetz NSN sind sogenannte PLC-Datenpakete mit einer Länge von jeweils 200 Bit und einer Dauer von 200 μs vorgesehen, die in einen PLC-Header PLC-H und in einen Nutzdatenbereich untergliedert sind. Der PLC-Header PLC-H umfaßt im wesentlichen eine Adreßinformation zur Adressierung der an das Niederspannungsnetz NSN angeschossenen Slaves S. Die Adreßinformation kann dabei durch eine den Slaves S jeweils eindeutig zugeordnete MAC-Adresse (Medium Access Control) gebildet werden. Die MAC-Adresse ist eine eindeutige, auf der Schicht 2 des OSI-Referenzmodells angesiedelte 6 Byte lange Hardware-Adresse. Alternativ kann eine Adressierung der an das Niederspannungsnetz NSN angeschlossenen Slaves S durch eine auf dem ATM-Protokoll (Asynchronous Transfer Modus) basierende VPI/VCI-Adressierung (Virtual Path Identifer / Virtual Channel Identifer) realisiert werden.

Für eine Realisierung einer bidirektionalen Datenübertragung über das Niederspannungsnetz NSN wird der Nutzdatenbereich des PLC-Datenpakets gemäß dem Zeitduplexverfahren - in der Literatur auch als 'Time Division Duplex' kurz 'TDD' bezeichnet - in zwei Rahmen - in der Literatur auch als Duplexbereiche bezeichnet - untergliedert. Hierbei erfolgt eine Aufteilung des Nutzdatenbereiches in einen Downstreambereich DS-B und in einen Upstreambereich US-B. Die im wesentlichen zeitgleich ankommenden komprimierten Binärrahmen KBR des Downstream- und des Upstream-Datenstroms DS,US des binär kodierten, komprimierten $S_{2m}$-Datenstroms werden dabei zeitlich aufeinanderfolgend in den jeweiligen Downstream- oder Upstreambereich DS-B, US-B des Nutzdatenbereiches des PLC-Datenpakets eingefügt.

Der Downstreambereich DS-B und der Upstreambereich US-B weisen jeweils eine Länge von 100 Bit bei einer Dauer von 100 μs auf. Um einen komprimierten Binärrahmen KBR mit einer Länge von 50 Bit und einer Dauer von 125 μs in den entsprechenden Duplexbereich DS-B, US-B einfügen zu können ist eine Zwischenspeicherung der komprimierten Binärrahmen KBR notwendig. Zusätzlich wird der, durch die unterschiedliche Länge der Dupexbereiche DS-B, US-B und der komprimierten Binärrahmen KBR entstehende freie Bereich im Nutzdatenbereich des PLC-Datenpakets durch Leerdaten L aufgefüllt.

Die PLC-Datenpakete werden anschließend für eine Übertragung über das Niederspannungsnetz NSN von der Protokolleinheit PE an eine Übertragungseinheit UEE übermittelt. Die Übertragungseinheit UEE realisiert die Datenübertragung beispielsweise gemäß dem OFDM-Übertragungsverfahren (Orthogonal Frequency Division Muliplex) mit einer vorgeschalteten FEC-Fehlerkorrektur (Forward Error Correction) und einer vorgeschalteten DQPSK-Modulation (Differenz Quadratur Phase Shift Keying). Nähere Information zu diesen Übertragungs- und Modulationsverfahren können aus der bisher nicht veröffentlichten Diplomarbeit von Jörg Stolle: "Powerline Communication PLC", 5/99, Siemens AG, entnommen werden.

Bei diesem ersten Umsetzungsmodus wird der Nutzdatenbereich des PLC-Datenpakets in zwei Duplexbereiche mit jeweils 100 Bit Länge aufgeteilt. Somit ergibt sich - ohne Berücksichtigung des PLC-Headers - eine benötigte Übertragungsbitrate von:

$$(200 \text{ Bit}) / 200 \mu s = 1 \text{ MBit/s.}$$

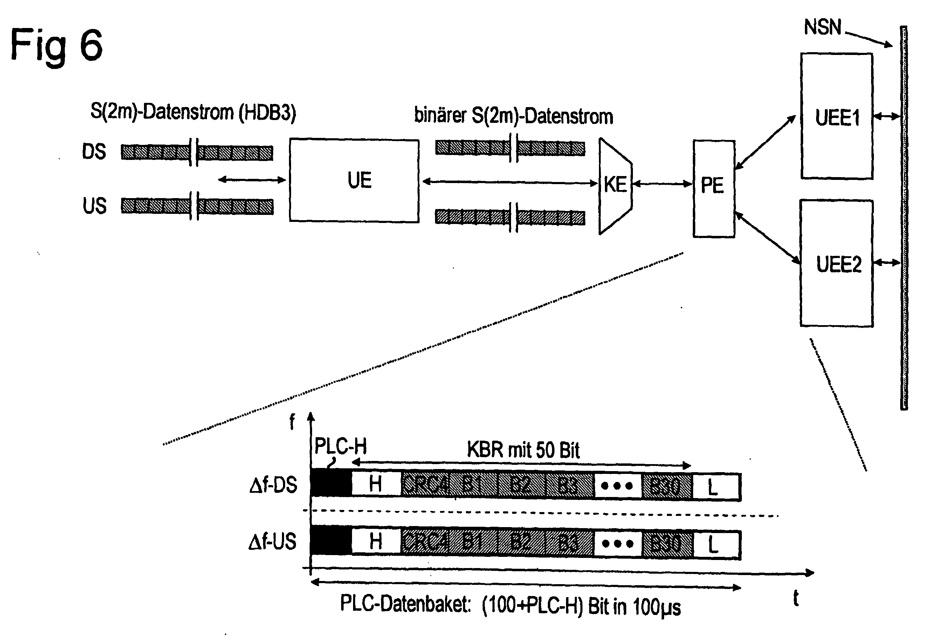

Fig. 6 zeigt ein Strukturbild zur schematischen Darstellung einer Umsetzung des im HDB-3-Kanalkode kodierten, pseudoternären $S_{2m}$-Datenstroms für eine Übermittlung über das Niederspannungsnetz NSN gemäß einer zweiten Ausführungsform. Analog zur ersten Ausführungsform wird in einem ersten Schritt der gemäß dem HDB3-Kanalkode kodierte, pseudoternäre $S_{2m}$-Datenstrom durch die Umwandlungseinheit UE - wie unter Bezugnahme auf Fig. 2 beschrieben - in einen binär kodierten $S_{2m}$-Datenstrom umgewandelt. Der binär kodierte, aus einer Folge von Binärrahmen BR bestehende $S_{2m}$-Datenstrom wird anschließend an eine Komprimierungseinheit KE weitergeleitet, durch welche der binär kodierte $S_{2m}$-Datenstrom - wie unter Bezugnahme auf Fig. 3 und Fig. 4 beschrieben - linearisiert und komprimiert wird. In einem nächsten Schritt wird der komprimierte $S_{2m}$-Datenstrom an eine Protokolleinheit PE weitergeleitet, die diesen in ein für eine Datenübermittlung über das Niederspannungsnetz NSN vorgesehenes Datenformat umgewandelt.

Für eine Realisierung einer bidirektionalen Datenübertragung über das Niederspannungsnetz NSN werden gemäß der zweiten Ausführungsform für den Downstream-Datenstrom DS und für den Upstream-Datenstrom US unterschiedliche PLC-Datenpakete definiert, die mit Hilfe des Frequenzduplexverfahren - in der Literatur häufig als 'Frequency Division Duplex' kurz 'FDD' bezeichnet - durch Modulation in zwei unterschiedliche Frequenzbereiche Δf-DS, Δf-US verschoben werden.

Die für den Downstream-Datenstrom DS und für den Upstream-Datenstrom US definierten PLC-Datenpakete weisen jeweils eine Länge von 100 Bit bei einer Dauer von 100 µs auf. Um einen komprimierten Binärrahmen KBR mit einer Länge von 50 Bit und einer Dauer von 125 µs in den entsprechenden Duplexbereich DS-B, US-B einfügen zu können ist analog zur ersten Ausführungsform eine Zwischenspeicherung der komprimierten Binärrahmen KBR notwendig. Zusätzlich wird der, durch die unterschiedliche Länge der Nutzdatenbereiche der PLC-Datenpakete und der komprimierten Binärrahmen KBR entstehende freie Bereich im Nutzdatenbereich des PLC-Datenpakets durch Leerdaten L aufgefüllt.

Die PLC-Datenpakete werden anschließend für eine Übertragung über das Niederspannungsnetz NSN von der Protokolleinheit PE an eine erste bzw. eine zweite Übertragungseinheit UEE1, UEE2 übermittelt. Die erste und die zweite Übertragungseinheit UEE1, UEE2 realisieren die Datenübertragung beispielsweise gemäß dem OFDM-Übertragungsverfahren mit einer vorgeschalteten FEC-Fehlerkorrektur und einer vorgeschalteten DQPSK-Modulation. Hierbei steuert beispielsweise die erste Übertragungseinheit UEE1 eine Datenübertragung über das Niederspannungsnetz NSN in einem ersten Frequenzbereich Δf-DS und die zweite Übertragungseinheit UEE2 die Datenübertragung in einem zweiten Frequenzbereich Δf-US.

Bei diesem zweiten Umsetzungsmodus weisen die PLC-Datenpakete jeweils eine Länge von 100 Bit bei einer Dauer von 100 µs auf. Somit ergibt sich für die Downstream-Richtung DS und für die Upstream-Richtung US jeweils eine benötigte Übertragungsbitrate von:

$$(100 \text{ Bit}) / 125\mu s = 500 \text{ kBit/s}.$$

Auf der Empfängerseite erfolgt ein Auslesen der PLC-Datenpakete aus dem Niederspannungsnetz NSN und eine Umwandlung in einen gemäß dem HDB-3-Kanalkode kodierten, pseudoternären $S_{2m}$-Datenstrom analog zu der beschriebenen Funktionsweise lediglich in umgekehrter Richtung.

**Patentansprüche**

1. Verfahren zur Umsetzung eines $S_{2m}$-Datenstroms für eine Übermittlung über ein Niederspannungsstromnetz (NSN),
bei dem der pseudoternäre, aus einer Folge von $S_{2m}$-Rahmen (S2mR) bestehende $S_{2m}$-Datenstrom in einen binären, aus einer Folge von Binärrahmen (BR) bestehenden Datenstrom umgewandelt wird,
bei dem eine in einem Binärrahmen (BR) enthaltene Nutzinformation aus dem Binärrahmen (BR) separiert und nachfolgend komprimiert wird,
bei dem die komprimierte Nutzinformation mit den unkomprimierten Informationen des Binärrahmens (BR) zu einem komprimierten Binärrahmen (KBR) zusammengefaßt wird,
bei dem die komprimierten Binärrahmen (KBR) in für eine Datenübermittlung über das Niederspannungsstromnetz (NSN) vorgesehene Übertragungspakete eingefügt und an eine Übertragungseinheit (UEE) zur Übermittlung über das Niederspannungsstromnetz (NSN) weitergeleitet werden.

2. Verfahren nach Anspruch 1,
**dadurch gekennzeichnet,**
**daß** für eine Datenübermittlung über das Niederspannungsstromnetz (NSN) eine Master-Slave-Kommunikationsbeziehung eingerichtet wird.

3. Verfahren nach Anspruch 1 oder 2,
**dadurch gekennzeichnet,**
**daß** mit Hilfe eines Zeitduplexverfahrens die Übertragungspakete in einen ersten Bereich (DS-B) für eine Datenübermittlung in einer ersten Übertragungsrichtung (DS) und in einen zweiten Bereich (US-B) für eine Datenübermittlung in einer zweiten Übertragungsrichtung (US) aufgeteilt werden, und
**daß** die komprimierten Binärrahmen (KBR) richtungsabhängig in den ersten oder den zweiten Bereich (DS-B, US-B) des Übertragungspakets eingefügt werden.

4. Verfahren nach Anspruch 3,
**dadurch gekennzeichnet,**
**daß** im ersten Bereich (DS-B) komprimierte Binärrahmen (KBR) von einer Master-Einrichtung (M) zu einer Slave-Einrichtung (S) und im zweiten Bereich (US-B) komprimierte Binärrahmen (KBR) von der Slave-Einrichtung (S) zur Master-Einrichtung (M) übermittelt werden.

5. Verfahren nach Anspruch 3 oder 4,
**dadurch gekennzeichnet,**
**daß** die Stellen des ersten und des zweiten Bereichs (DS-B; US-B) die nach dem Einfügen eines komprimierte Binärrahmen (KBR) in den jeweiligen Bereich (DS-B, US-B) keine Information enthalten mit Leerdaten (L) aufgefüllt werden.

6. Verfahren nach Anspruch 1,
**dadurch gekennzeichnet,**

**daß** mit Hilfe eines Frequenzduplexverfahrens erste, für eine Datenübermittlung in eine erste Übertragungsrichtung (DS) vorgesehene Übertragungspakete in einen ersten Frequenzbereich (Δf-DS) und zweite, für eine Datenübermittlung in eine zweite Übertragungsrichtung (US) vorgesehene Übertragungspakete in einen zweiten Frequenzbereich (Δf-US) moduliert werden,

**daß** die komprimierten Binärrahmen (KBR) richtungsabhängig in die ersten oder zweiten Übertragungspakets eingefügt werden, und daß die ersten Übertragungspakete an eine erste Übertragungseinheit (UEE1) und die zweiten Übertragungspakete an eine zweite Übertragungseinheit (UEE2) zur Übermittlung über das Niederspannungsstromnetz (NSN) weitergeleitet werden.

7. Verfahren nach Anspruch 6,
   **dadurch gekennzeichnet,**
   **daß** in den ersten Übertragungspaketen komprimierte Binärrahmen (KBR) von einer Master-Einrichtung (M) zu einer Slave-Einrichtung (S) und in den zweiten Übertragungspaketen komprimierte Binärrahmen (KBR) von der Slave-Einrichtung (S) zur Master-Einrichtung (M) übermittelt werden.

8. Verfahren nach Anspruch 6 oder 7,
   **dadurch gekennzeichnet,**
   **daß** die Stellen des ersten und des zweiten Übertragungspakets die nach dem Einfügen eines komprimierte Binärrahmen (KBR) in das jeweilige Übertragungspaket keine Information enthalten mit Leerdaten (L) aufgefüllt werden.

9. Verfahren nach einem der vorhergehenden Ansprüche,
   **dadurch gekennzeichnet,**
   **daß** bei der Umwandlung eines $S_{2m}$-Rahmens (SR) zu einem Binärrahmen (BR) eine Information zur Rückgewinnung des $S_{2m}$-Rahmens (SR) eingefügt wird.

10. Verfahren nach Anspruch 8,
    **dadurch gekennzeichnet,**
    **daß** als Information ein Anfangszustands-Bit (ANF), ein Synchronisations-Bit (SYN), ein V-Bit (V) und ein B-Bit (B) in den Binärrahmen (BR) eingefügt werden.

11. Verfahren nach einem der vorhergehenden Ansprüche,
    **dadurch gekennzeichnet,**
    **daß** die Nutzinformation gemäß dem durch die ITU-T standardisierten Komprimierungsverfahren G.729 komprimiert wird.

12. Verfahren nach Anspruch 11,
    **dadurch gekennzeichnet,**

**daß** die einem jeweiligen Nutzdatenkanal (B1,..., B30) zugeordnete Nutzinformation getrennt in jeweils einer kanalspezifischen Komprimierungseinrichtungen (KE-B1,...,KE-B30) komprimiert wird.

13. Verfahren nach Anspruch 11 oder 12,
    **dadurch gekennzeichnet,**
    **daß** die gemäß einer nichtlinearen A-Kennlinie kodierte, eine 8-Bit Auflösung aufweisende Nutzinformation vor ihrer Komprimierung in ein lineares, eine 16-Bit Auflösung aufweisendes Signal umgewandelt wird.

14. Vorrichtung zur Umsetzung eines $S_{2m}$-Datenstroms für eine Übermittlung über ein Niederspannungsstromnetz (NSN),
    mit einer Umwandlungseinheit (UE) zur Umwandlung des pseudoternären, aus einer Folge von $S_{2m}$-Rahmen (S2mR) bestehenden $S_{2m}$-Datenstroms in einen binären, aus einer Folge von Binärrahmen (BR) bestehenden Datenstrom,
    mit einer Separierungseinheit (ASE) zum Separieren einer in einem Binärrahmen (BR) enthaltenen Nutzinformation und einer Komprimierungseinheit (KE) zum Komprimieren der separierten Nutzinformation,
    mit einer Rahmenbildungseinheit zum Zusammenfassen der komprimierten Nutzinformation mit den unkomprimierten Informationen des Binärrahmens (BR) zu einem komprimierten Binärrahmen (KBR),
    mit einer Protokolleinheit (PE) zum Einfügen der komprimierten Binärrahmen (KBR) in ein für eine Datenübermittlung über das Niederspannungsstromnetz (NSN) vorgesehenes Übertragungspaket, und
    mit einer Übertragungseinheit (UEE) zum Einspeisen der Übertragungspakete in das Niederspannungsstromnetz (NSN).

15. Vorrichtung nach Anspruch 14,
    **dadurch gekennzeichnet,**
    **daß** die Komprimierungseinheit (KE) gemäß dem durch die ITU-T standardisierten Komprimierungsverfahren G.729 ausgestaltet ist.

16. Vorrichtung nach Anspruch 14 oder 15,
    **dadurch gekennzeichnet,**
    **daß** die Komprimierungseinheit (KE) dreißig kanalspezifische Komprimierungseinheiten (KE-B1,..., KE-B30) aufweist.

17. Vorrichtung nach Anspruch 16,
    **dadurch gekennzeichnet,**
    **daß** den kanalspezifischen Komprimierungseinheiten (KE-B1,..., KE-B30) jeweils eine Linearisierungseinheit (LE) zur Umwandlung der gemäß einer nichtlinearen A-Kennlinie kodierte, eine 8-Bit Auflösung aufweisenden Nutzinformation in ein lineares, eine 16-Bit Auflösung aufweisendes Signal vorgeschaltet ist.

**18.** Vorrichtung nach einem der Ansprüche 14 bis 17, **dadurch gekennzeichnet,** daß die Protokolleinheit (PE) derart ausgestaltet ist, daß

- mit Hilfe eines Zeitduplexverfahrens die Übertragungspakete in einen ersten Bereich (DS-B) für eine Datenübermittlung in einer ersten Übertragungsrichtung (DS) und in einen zweiten Bereich (US-B) für eine Datenübermittlung in einer zweiten Übertragungsrichtung (US) aufgeteilt werden, und
- **daß** die komprimierten Binärrahmen (KBR) richtungsabhängig in den ersten oder den zweiten Bereich (DS-B, US-B) des Übertragungspakets eingefügt werden.

**19.** Vorrichtung nach einem der Ansprüche 14 bis 17, **dadurch gekennzeichnet,** daß die Protokolleinheit (PE) derart ausgestaltet ist, daß

- mit Hilfe eines Frequenzduplexverfahrens erste, für eine Datenübermittlung in eine erste Übertragungsrichtung (DS) vorgesehene Übertragungspakete in einen ersten Frequenzbereich (Δf-DS) und zweite, für eine Datenübermittlung in eine zweite Übertragungsrichtung (US) vorgesehene Übertragungspakete in einen zweiten Frequenzbereich (Δf-US) moduliert werden,
- **daß** die komprimierten Binärrahmen (KBR) richtungsabhängig in die ersten oder zweiten Übertragungspakets eingefügt werden.

**20.** Vorrichtung nach Anspruch 19, **gekennzeichnet durch**, eine erste Übertragungseinheit (UEE1) zur Übermittlung der ersten Übertragungspakete und einer zweiten Übertragungseinheit (UEE2) zur Übermittlung der zweiten Übertragungspakete über das Niederspannungsstromnetz (NSN).

**21.** Vorrichtung nach einem der Ansprüche 14 bis 20, **dadurch gekennzeichnet,** daß für eine Datenübermittlung über das Niederspannungsstromnetz (NSN) eine Master-Slave-Kommunikationsbeziehung eingerichtet ist.

**22.** Vorrichtung nach Anspruch 21, **dadurch gekennzeichnet,** daß eine die Spannungsumsetzung zwischen einem Mittelspannungsstromnetz (MSN) und dem Niederspannungsstromnetz (NSN) ausführende Transformatorstation (MSN-NSN TS) als Master-Einrichtung (M) ausgestaltet ist.

**23.** Vorrichtung nach Anspruch 21 oder 22, **dadurch gekennzeichnet,** daß eine einem jeweiligen Inhausbereich (IHB) des Niederspannungsstromnetzes (NSN) zugeordnete Zählereinrichtung (ZE) als Slave-Einrichtung (S) ausgestaltet ist.

**Claims**

**1.** Method for conversion of an $S_{2m}$ data stream for transmission via a low-voltage power network (NSN),
in which the pseudoternary $S_{2m}$ data stream which comprises a sequence of $S_{2m}$ frames (S2mR) is converted to a binary data stream which comprises a sequence of binary frames (BR),
in which payload information which is contained in a binary frame (BR) is separated from the binary frame (BR) and is then compressed,
in which the compressed payload information is combined with the uncompressed information in the binary frame
(BR) to form a compressed binary frame (KBR), and
in which the compressed binary frames (KBR) are inserted into transmission packets, which are intended for data transmission via the low-voltage power network (NSN), and are passed to a transmission unit (UEE) for transmission via the low-voltage power network (NSN).

**2.** Method according to Claim 1, **characterized in that** a master-slave communication relationship is set up for data transmission via the low-voltage power network (NSN).

**3.** Method according to Claim 1 or 2, **characterized in that** a time-division duplexing method is used to subdivide the transmission packets into a first area (DS-B) for data transmission in the first transmission direction (DS), and into a second area (US-B) for data transmission in a second transmission direction (US), and
**in that** the compressed binary frames (KBR) are inserted into the first area or the second area (DS-B, US-B) of the transmission packet, depending on the direction.

**4.** Method according to Claim 3, **characterized in that** compressed binary frames (KBR) are transmitted from a master device (M) to a slave device (S) in the first area (US-B), and compressed binary frames (KBR) are transmitted from the slave device (S) to the master device (M) in the second area (US-B).

5. Method according to Claim 3 or 4, **characterized in that**
the locations of the first area and of the second area (DS-B; US-B) which do not contain any information after insertion of a compressed binary frame (KBR) into the respective area (DS-B, US-B) are filled with blank data (L) .

6. Method according to Claim 1,
**characterized in that** first transmission packets, which are intended for data transmission in a first transmission direction (DS), are modulated by means of a frequency-division duplexing method into a first frequency band ($\Delta$f-DS), and second transmission packets, which are intended for data transmission in a second transmission (US), are modulated into a second frequency band ($\Delta$f-US),
**in that** the compressed binary frames (KBR) are inserted into the first or second transmission packets depending on the direction,
and **in that** the first transmission packets are passed to a first transmission unit (UEE1), and the second transmission packets are passed to a second transmission unit (UEE2), for transmission via the low-voltage power network (NSN).

7. Method according to Claim 6, **characterized in that** compressed binary frames (KBR) are transmitted from a master device (M) to a slave device (S) in thefirst transmission packets, and compressed binary frames (KBR) re transmitted from the slave device (S) to the master device (M) in the second transmission packets.

8. Method according to Claim 6 or 7, **characterized in that**
those locations in the first and in the second transmission packets which do not contain any information after insertion of a compressed binary frame (KBR) into the respective transmission packet are filled with blank data (L).

9. Method according to one of the preceding claims, **characterized in that**,
during the conversion of an $S_{2m}$ frame (SR) to a binary frame (BR), information is inserted for recovery of the $S_{2m}$ frame (SR).

10. Method according to Claim 8,
**characterized in that**
an initial status bit (ANF), a synchronization bit (SYN), a V bit (V) and a B bit (B) are inserted into the binary frame (BR) as information.

11. Method according to one of the preceding claims

**characterized in that**
the payload information is compressed using the compression method G.729 standardized by the ITU-T.

12. Method according to Claim 11,
**characterized in that**
the payload information which is associated with a respective payload data channel (B1,...,B30) is compressed separately in a respective channel-specific compression device (KE-B1,...,KE-B30).

13. Method according to Claim 11 or 12,
**characterized in that**
the payload information, which is coded using a nonlinear A characteristic and has 8-bit resolution, is converted, before being compressed, to a linear signal which has 16-bit resolution.

14. Apparatus for conversion of an $S_{2m}$ data stream for transmission via a low-voltage power network (NSN),
having a conversion unit (UE) for conversion of the pseudoternary $S_{2m}$ data stream, which comprises a sequence of $S_{2m}$ frames (S2mR) to a binary data stream which comprises a sequence of binary frames (BR),
having a separation unit (ASE) for separation of payload information which is contained in a binary frame (BR), and having a compression unit (KE) for compression of the separated payload information, having a frame formation unit for combination of the compressed payload information with the uncompressed information in the binary frame (BR) to form a compressed binary frame (KBR),
having a protocol unit (PE) for insertion of the compressed binary frames (KBR) into a transmission packet which is intended for data transmission via the low-voltage power network (NSN), and
having a transmission unit (UEE) for feeding the transmission packets into the low-voltage power network (NSN).

15. Apparatus according to Claim 14,
**characterized in that**
the compression unit (KE) is designed on the basis of the compression method G.729 standardized by the ITU-T.

16. Apparatus according to Claim 14 or 15,
**characterized in that**
the compression unit (KE) has thirty channel-specific compression units (KE-B1,...,KE-B30).

17. Apparatus according to Claim 16,
**characterized in that**
the channel-specific compression units (KE-B1,..., KE-B30) are each preceded by a linearization unit (LE) for conversion of the payload information, which is coded using a nonlinear A characteristic and has 8-bit resolution, to a linear signal which has 16-bit resolution.

18. Apparatus according to one of Claims 14 to 17, **characterized in that** the protocol unit (PE) is designed such that

    - a time-division duplexing method is used to subdivide the transmission packets into a first area (DS-B) for data transmission in a first transmission direction (DS), and into a second area (US-B) for data transmission in a second transmission direction (US), and
    - the compressed binary frames (KBR) are inserted into the first area or the second area (DS-B, US-B) of the transmission packet, depending on the direction.

19. Apparatus according to one of Claims 14 to 17, **characterized in that** the protocol unit (PE) is designed such that

    - first transmission packets, which are intended for data transmission in a first transmission direction (DS), are modulated by means of a frequency-division duplexing method into a first frequency band ($\Delta$f-DS), and second transmission packets, which are intended for data transmission in a second transmission direction (US), are modulated into a second frequency band ($\Delta$f-DS), and
    - such that the compressed binary frames (KBR) are inserted into the first or second transmission packets depending on the direction.

20. Apparatus according to Claim 19, **characterized by** a first transmission unit (UEE1) for transmission of the first transmission packets, and a second transmission unit (UEE2) for transmission of the second transmission packets, via the low-voltage power network (NSN).

21. Apparatus according to Claims 14 to 20, characterizeed in that a master-slave communication relationship is set up for data transmission via the low-voltage power network (NSN).

22. Apparatus according to Claim 21, **characterized in that** a transformer station (MSN-NSN TS) which carries out the voltage conversion between a medium-voltage power network (MSN) and the low-voltage power network (NSN) is configured as the master device (M).

23. Apparatus according to Claim 21 or 22, **characterized in that** a meter device (ZE), which is associated with a respective in-house area (IHB) of the low-voltage power network (NSN), is configured as the slave device (S).

## Revendications

1. Procédé de conversion d'un flux de données $S_{2m}$ pour sa transmission par l'intermédiaire d'un réseau basse tension (NSN), selon lequel le flux de données $S_{2m}$ pseudoternaire constitué d'une suite de trames $S_{2m}$ (S2mR) est converti en un flux de données binaire constitué d'une suite de trames binaires (BR), une information utile contenue dans une trame binaire (BR) est séparée de la trame binaire (BR) puis comprimée, selon lequel l'information utile comprimée est regroupée avec les informations non comprimées de la trame binaire (BR) en une trame binaire (KBR) comprimée, les trames binaires comprimées (KBR) sont insérées dans des paquets de transmission prévus pour transmettre des données par le réseau basse tension (NSN) et acheminées jusqu'à une unité de transmission (UEE) pour être transmises par l'intermédiaire du réseau basse tension (NSN).

2. Procédé selon la revendication 1, **caractérisé en ce que**, un mode de communication Maître-Esclave est établi pour transmettre des données par le réseau basse tension (NSN).

3. Procédé selon la revendication 1 ou 2, **caractérisé en ce que**, avec l'aide d'un procédé de duplex temporel, les paquets de transmission sont séparés en une première plage (DS-B) pour la transmission de données dans un premier sens de transmission (DS) et en une deuxième plage (US-B) pour la transmission de données dans un deuxième sens de transmission (US), et les trames binaires comprimées (KBR) sont insérées selon le sens, dans la première ou la deuxième plage (DS-B, US-B) du paquet de transmission.

4. Procédé selon la revendication 3, **caractérisé en ce que**, dans la première plage (DS-B), les trames binaires comprimées (KBR) sont transmises d'un dispositif Maître (M) à un dispositif Esclave (S) et dans la deuxième plage (US-B), les trames binaires comprimées (KBR) sont transmises du dispositif Esclave (S) au dispositif Maître (M).

**5.** Procédé selon la revendication 3 ou 4, **caractérisé en ce que** les positions de la première et de la deuxième plage (DS-B ; US-B), qui ne contiennent pas d'information après l'insertion d'une trame binaire comprimée (KBR) dans la plage concernée (DS-B, US-B), sont remplies avec des données de remplissage (L).

**6.** Procédé selon la revendication 1, **caractérisé en ce que**, avec l'aide d'un procédé de fréquences en duplex, les premiers paquets de transmission prévus pour transmettre des données dans un premier sens de transmission (DS) sont modulés dans une première gamme de fréquence (Δf-DS) et les deuxièmes paquets de transmission prévus pour transmettre des données dans un deuxième sens de transmission (US) sont modulés dans une deuxième gamme de fréquences (Δf-US), les trames binaires comprimées (KBR) sont insérées selon le sens, dans les premiers ou dans les deuxièmes paquets de transmission et les premiers paquets de transmission sont acheminés jusqu'à une première unité de transmission (UEE1) et les deuxièmes paquets de transmission sont acheminés jusqu'à une deuxième unité de transmission (UEE2) pour être transmis par le réseau basse tension (NSN).

**7.** Procédé selon la revendication 6, **caractérisé en ce que**, dans les premiers paquets de transmission, des trames binaires comprimées (KBR) sont transmises depuis un dispositif Maître (M) jusqu'à un dispositif Esclave (S) et dans les deuxièmes paquets de transmission, des trames binaires comprimées (KBR) sont transmises depuis le dispositif Esclave (S) au dispositif Maître (M).

**8.** Procédé selon la revendication 6 ou 7, **caractérisé en ce que** les positions du premier et du deuxième paquet de transmission qui ne contiennent aucune information après l'insertion d'une trame binaire comprimée (KBR) dans le paquet de transmission concerné, sont remplies de données de remplissage (L).

**9.** Procédé selon l'une des revendications précédentes, **caractérisé en ce que**, lors de la conversion d'une trame $S_{2m}$ (SR) en une trame binaire (BR), une information servant à récupérer la trame $S_{2m}$ (SR) est insérée.

**10.** Procédé selon la revendication 8, **caractérisé en ce que** un bit d'état initial (ANF), un bit de synchronisation (SYN), un bit V (V) et un bit B (B) sont insérés comme information dans les trames binaires (BR).

**11.** Procédé selon l'une des revendications précédentes, **caractérisé en ce que** l'information utile est comprimée conformément au procédé de compression G.729 standardisé par l'ITU-T.

**12.** Procédé selon la revendication 11, **caractérisé en ce que** l'information utile attribuée à un canal de données utiles (B1, ...,B30) en particulier est comprimée séparément dans un dispositif de compression correspondant (KE-B1,...,KE-B30) spécifique en fonction du canal.

**13.** Procédé selon la revendication 11 ou 12 , **caractérisé en ce que** l'information utile codée conformément à une courbe caractéristique A non linéaire et dotée d'une résolution de 8 bits est convertie avant d'être comprimée, en un signal linéaire doté d'une résolution de 16 bits.

**14.** Dispositif de conversion d'un flux de données $S_{2m}$ pour sa transmission par un réseau basse tension (NSN), avec une unité de conversion (UE) pour convertir le flux de données $S_{2m}$ pseudotemaire, constitué d'une suite de trames $S_{2m}$ (S2mR) en un flux de données binaire constitué d'une suite de trames binaires (BR), avec une unité de séparation (ASE) pour séparer une information utile contenue dans une trame binaire (BR) et une unité de compression (KE) pour comprimer l'information utile séparée, avec une unité de composition de trame pour regrouper l'information utile comprimée avec les informations non comprimées de la trame binaire (BR) en une trame binaire comprimée (KBR), avec une unité de protocole (PE) pour insérer les trames binaires (KBR) comprimées dans un paquet de transmission prévu pour transmettre des données par l'intermédiaire du réseau basse tension (NSN), et avec une unité de transmission (UEE) pour injecter les paquets de transmission dans le réseau basse tension (NSN).

**15.** Dispositif selon la revendication 14, **caractérisé en ce que** l'unité de compression (KE) est conçue conformément au procédé de compression G.729 standardisé par l'ITU-T.

**16.** Dispositif selon la revendication 14 ou 15, **caractérisé en ce que** l'unité de compression (KE) présente 30 unités de compression (KE-B1,...,KE-B30) spécifiques en fonction du canal.

**17.** Dispositif selon la revendication 16, **caractérisé en ce que** une unité de linéarisation (LE) servant à convertir l'information utile codée conformément à une courbe caractéristique A non linéaire et dotée d'une résolution de 8 bits en un signal linéaire d'une résolution de 16 bits est toujours installée avant les unités de compression spécifiques au canal (KE-B1,..., KE-B30).

**18.** Dispositif selon l'une des revendications 14 à 17, **caractérisé en ce que** l'unité de protocole (PE) est conçue de manière à ce que

- avec l'aide d'un procédé de duplex temporel, les paquets de transmission sont séparés en une première plage (DS-B) pour transmettre des données dans un premier sens de transmission (DS) et en une deuxième plage (US-B) pour transmettre des données dans un deuxième sens de transmission (US), et
- les trames binaires comprimées (KBR) sont insérées selon le sens, dans la première ou la deuxième plage (DS-B, US-B) du paquet de transmission.

**19.** Dispositif selon l'une des revendications 14 à 17, **caractérisé en ce que** l'unité de protocole (PE) est conçue de manière à ce que

- avec l'aide d'un procédé de fréquences en duplex, les premiers paquets de transmission prévus pour transmettre des données dans un premier sens de transmission (DS) sont modulés dans une première gamme de fréquence ($\Delta$f-DS) et les deuxièmes paquets de transmission prévus pour transmettre des données dans un deuxième sens de transmission (US) sont modulés dans une deuxième gamme de fréquences ($\Delta$f-US),
- les trames binaires comprimées (KBR) sont insérées selon le sens, dans les premiers ou dans les deuxièmes paquets de transmission.

**20.** Dispositif selon la revendication 19, **caractérisé par** une première unité de transmission (UEE1) pour transmettre les premiers paquets de transmission et une deuxième unité de transmission (UEE2) pour transmettre les deuxièmes paquets de transmission par le réseau basse tension (NSN).

**21.** Dispositif selon l'une des revendications 14 à 20,

**caractérisé en ce que** un mode de communication Maître-Esclave est établi pour transmettre des données par le réseau basse tension (NSN).

**22.** Dispositif selon la revendication 21, **caractérisé en ce que** un transformateur (MSN-NSN TS) effectuant la conversion de tension entre un réseau moyenne tension (MSN) et le réseau basse tension (NSN) est conçu comme un dispositif Maître (M).

**23.** Dispositif selon la revendication 21 ou 22, **caractérisé en ce que** un compteur (ZE) attribué à chaque zone interne (IHB) du réseau basse tension (NSN) est conçu comme un dispositif Esclave (S).

Fig 1

S2mR: 256 Bit in 125 μs

K0 K1 K2 K3 K4 K5 K6 K7 K8 K9 K10 K11 K12 K13 K14 K15 K16 K17 K18 K19 K20 K21 K22 K23 K24 K25 K26 K27 K28 K29 K30 K31

CRC4

B1 - B14

D

B15 - B30

## Fig 2a

S(2m)-Datenstrom (HDB3)

binärer S(2m)-Datenstrom

DS

je 2048 kBit/s

US

UE

DS

je 2080 kBit/s

US

H

H

S2mR

BR: 260 Bit in 125 μs

SYN    ANF    V    B

## Fig 2b

EP 1 243 085 B1

Fig 3

# Fig 4

PCM-kodierter, nichtlinearer Abtastwert 8 Bit

Vorzeichenbit
Segment
Stufe

| 1Bit | 1Bit | 1Bit | 1Bit | 1Bit | 1Bit | 1Bit | 1Bit |

LE

linearer Abtastwert 16 Bit

| Bit1 | Bit2 | Bit3 | | B13 | B14 | B15 | B16 |

A-Kennlinie

PCM-
Wert
(8-Bit)

A/D-Wandlerwert

lineare Kennlinie

PCM-
Wert
(16-Bit)

A/D-Wandlerwert

EP 1 243 085 B1

Fig 5

# Fig 6

S(2m)-Datenstrom (HDB3)

binärer S(2m)-Datenstrom

DS

US

UE

KE

PE

UEE1

UEE2

NSN

PLC-H

KBR mit 50 Bit

Δf-DS     H   CRC4  B1   B2   B3  •••  B30   L

Δf-US     H   CRC4  B1   B2   B3  •••  B30   L

f

t

PLC-Datenbaket: (100+PLC-H) Bit in 100µs

EP 1 243 085 B1